# EUROPEAN PATENT SPECIFICATION

(11) **EP 2 425 479 B1**
(45) Date of publication and mention of the grant of the patent: **09.09.2015**
(21) Application number: 10703400.1
(22) Date of filing: 03.02.2010
(51) Int. Cl.: H01M 4/485, H01M 10/0567, H01M 2/02, H01M 10/052, H01M 10/0587, H01M 4/505, H01M 4/525, H01M 10/0568, H01M 10/0569

(54) **LITHIUM-ION BATTERY WITH ELECTROLYTE ADDITIVE**
LITHIUMIONENBATTERIE MIT ELEKTROLYTZUSATZMITTEL
BATTERIE AU LITHIUM-ION DOTÉE D'UN ADDITIF D'ÉLECTROLYTE

(30) Priority: 30.04.2009 US 433557
(43) Date of publication of application: 07.03.2012
(73) Proprietor: Medtronic, Inc, Minneapolis, MN 55432 (US)
(72) Inventor: SCOTT, Erik R., Maple Grove MN 55311 (US); JAIN, Gaurav, Edina MN 55436 (US); EBERMAN, Kevin W., St. Paul Minnesota 55105 (US)
(74) Representative: Golding, Louise Ann
(86) International application number: PCT/US2010/022973
(87) International publication number: WO 2010/126631

(56) References cited:
- EP-A1- 0 856 901
- JP-A- 2007 115 527
- US-A1- 2007 077 496
- US-A1- 2009 035 662
- FORSYTH M ET AL: "Enhancement of ion dissociation in polyelectrolyte gels" ELECTROCHIMICA ACTA, ELSEVIER SCIENCE PUBLISHERS, BARKING, GB LNKD- DOI:10.1016/S0013-4686(03)00195-6, vol. 48, no. 14-16, 30 June 2003 (2003-06-30), pages 2129-2136, XP004431851 ISSN: 0013-4686
- ZHOU F ET AL: "Boroxine ring compounds as dissociation enhancers in gel polyelectrolytes" ELECTROCHIMICA ACTA, ELSEVIER SCIENCE PUBLISHERS, BARKING, GB LNKD- DOI:10.1016/S0013-4686(03)00151-8, vol. 48, no. 12, 30 May 2003 (2003-05-30), pages 1749-1758, XP004422993 ISSN: 0013-4686

## Description

### BACKGROUND

The present application relates generally to the field of rechargeable lithium-ion batteries or cells.

Lithium-ion batteries or cells (i.e., rechargeable or "secondary" batteries) include one or more positive electrodes, one or more negative electrodes, and an electrolyte provided within a case or housing. Separators made from a porous polymer or other suitable material may also be provided intermediate or between the positive and negative electrodes to prevent direct contact between adjacent electrodes. The positive electrode includes a current collector having an active material provided thereon, and the negative electrode includes a current collector having an active material provided thereon. The active materials for the positive and negative electrodes may be provided on one or both sides of the current collectors.

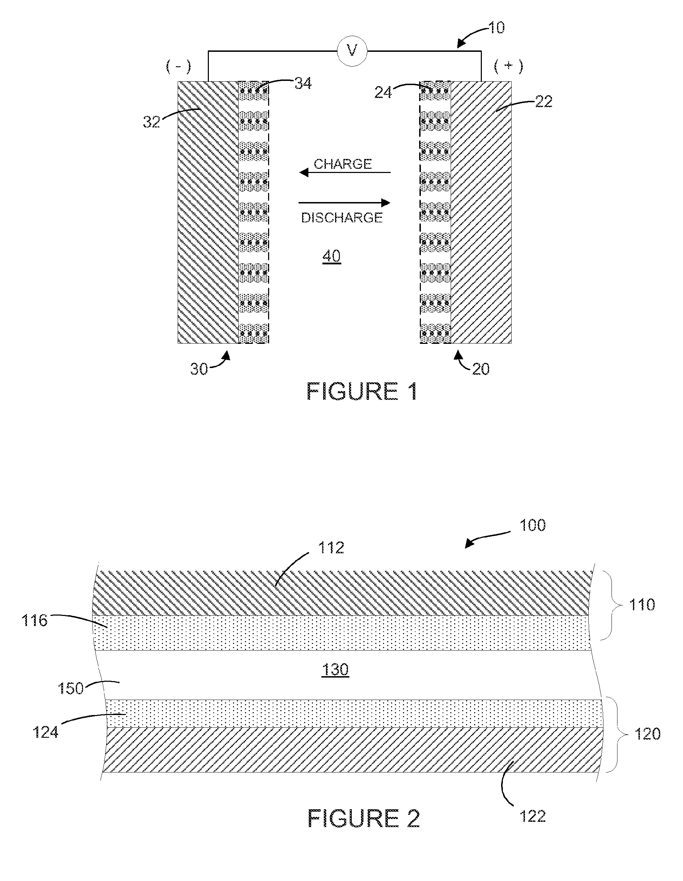

FIGURE 1 shows a schematic representation of a portion of a lithium-ion battery 10 such as that described above. The battery 10 includes a positive electrode 20 that includes a positive current collector 22 and a positive active material 24, a negative electrode 30 that includes a negative current collector 32 and a negative active material 34, an electrolyte material 40, and a separator (e.g., a polymeric microporous separator, not shown) provided intermediate or between the positive electrode 20 and the negative electrode 30. The electrodes 20, 30 may be provided as relatively flat or planar plates or may be wrapped or wound in a spiral or other configuration (e.g., an oval configuration). The electrode may also be provided in a folded configuration.

During charging and discharging of the battery 10, lithium ions move between the positive electrode 20 and the negative electrode 30. For example, when the battery 10 is discharged, lithium ions flow from the negative electrode 30 to the positive electrode 20. In contrast, when the battery 10 is charged, lithium ions flow from the positive electrode 20 to the negative electrode 30.

There are numerous challenges associated with the design and production of lithium-ion batteries, including, for example, ensuring that such batteries can withstand repeated cycling to deep discharge conditions (i.e., near zero volt state of charge). It is also desirable to control undesired side reactions between the battery components and to minimize the amount of swelling that may occur during charge cycling of the battery that may result from gas formation within the battery.

It would be advantageous to provide a rechargeable lithium-ion battery that exhibits improved resistance to cell swelling, lower cell impedance, and improved resistance to component corrosion due to unwanted side reactions during charge cycling. It would also be desirable to provide a battery that may be produced more quickly to reduce the manufacturing time and cost associated therewith.

JP2007115527 discloses a rechargeable lithium ion battery of the related art.

### SUMMARY

An exemplary embodiment relates to a rechargeable lithium-ion battery that comprises a positive electrode, a negative electrode comprising a lithium titanate active material, a separator provided between the positive electrode and the negative electrode, and an electrolyte. The battery also includes an electrolyte additive comprising at least one boroxine ring.

Another exemplary embodiment relates to a lithium-ion battery that comprises a positive electrode comprising a first active material. The battery also includes a negative electrode comprising a second active material, where the second active material comprises a material that cycles lithium at an average potential of greater than 0.2 volts versus a lithium reference electrode. The battery also includes an electrolyte comprising a boron based Lewis acid.

Another exemplary embodiment relates to a rechargeable lithium-ion battery that comprises a positive electrode, a negative electrode comprising a lithium titanate active material, and an electrolyte comprising a trimethoxyboroxine additive.

Another exemplary embodiment relates to a method of reducing swelling during cycling of a rechargeable lithium-ion battery comprising providing a positive electrode and a negative electrode within a battery housing, the negative electrode comprising a lithium titanate active material and providing an electrolyte within the housing. The method further includes introducing an additive into the electrolyte, the additive comprising trimethoxyboroxine. The trimethoxyboroxine additive is provided in an amount sufficient to provide improved resistance to battery swelling as compared to a lithium-ion battery having a negative electrode comprising a lithium titanate active material without a trimethoxyboroxine electrolyte additive.

### BRIEF DESCRIPTION OF THE DRAWINGS

FIGURE 1 is a cross-sectional view of a portion of a lithium-ion battery according to an exemplary embodiment.
FIGURE 2 is a schematic cross-sectional view of a portion of a lithium-ion battery according to an exemplary embodiment.
FIGURE 3 is a graph illustrating the reduction in battery swelling that may be obtained by including a boron-containing electrolyte additive for lithium-ion batteries having a lithium titanate negative electrode active material.
FIGURE 4 is a graph illustrating the reduction in impedance that may be obtained by including a boron-containing electrolyte additive for lithium-ion batteries having a lithium titanate negative electrode active material.
FIGURE 5 is a photograph of a battery case for a lithium-ion battery that did not include a boron-containing electrolyte additive after repeated deep discharge charge cycling, illustrating the corrosion of the battery case.
FIGURE 6 is a photograph of a battery case for a lithium-ion battery that utilized a boron-containing electrolyte additive after repeated deep discharge charge cycling, illustrating the improved resistance to corrosion as compared to the battery case shown in FIGURE 5.
FIGURE 7 is a graph illustrating the reduction in irreversible capacity as a result of the addition of TMOBX to the electrolyte for lithium-ion batteries having a lithium titanate negative electrode active material.
FIGURE 8 is a schematic view of a system in the form of an implantable medical device implanted within a body or torso of a patient.
FIGURE 9 is a schematic view of another system in the form of an implantable medical device.

### DETAILED DESCRIPTION

According to an exemplary embodiment, a rechargeable (i.e., secondary) lithium-ion battery or cell includes a positive electrode having an active material provided thereon and a negative electrode having an active material provided thereon. The active material provided on the negative electrode cycles lithium at greater than 0.2 volts versus a lithium reference electrode. According to an exemplary embodiment, the negative active material may be a lithium titanate material such as Li₄Ti₅O₁₂. An electrolyte is also provided in the battery that includes a boron-containing additive (e.g., boron-based Lewis acids such as trimethoxyboroxine (TMOBX)) to provide reduced battery swelling, lower cell impedence, and improved component stability, particularly when the battery is subjected to deep discharge conditions.

FIGURE 2 is a schematic cross-sectional view of a portion of a battery or cell 100 according to an exemplary embodiment that includes at least one positive electrode 110 and at least one negative electrode 120. The size, shape, and configuration of the battery may be selected based on the desired application or other considerations. For example, the electrodes may be flat plate electrodes, wound electrodes (e.g., in a jellyroll, folded, or other configuration), or folded electrodes (e.g., Z-fold electrodes). According to other exemplary embodiments, the battery may be a button cell battery, a thin film solid state battery, or another type of lithium-ion battery.

According to an exemplary embodiment, the battery 100 has a rating of between approximately 1 and 1000 milliampere hours (mAh). According to another exemplary embodiment, the battery has a rating of between approximately 100 and 400 mAh. According to another exemplary embodiment, the battery is an approximately 300 mAh battery. According to another exemplary embodiment, the battery is an approximately 75 mAh battery. According to another exemplary embodiment, the battery is an approximately 10 mAh battery.

The battery case or housing (not shown) is formed of a metal or metal alloy such as aluminum or alloys thereof, titanium or alloys thereof, stainless steel, or other suitable materials. According to another exemplary embodiment, the battery case may be made of a plastic material or a plastic-foil laminate material (e.g., an aluminum foil provided intermediate a polyolefin layer and a nylon or polyester layer).

The positive electrode 110 includes a current collector 112 made of a conductive material such as a metal. According to an exemplary embodiment, the current collector 112 comprises aluminum or an aluminum alloy.

According to an exemplary embodiment, the thickness of the current collector 112 is between approximately 5 µm and 75 µm. According to a particular exemplary embodiment, the thickness of the current collector 112 is approximately 20 µm. It should also be noted that while the positive current collector 112 has been illustrated and described as being a thin foil material, the positive current collector may have any of a variety of other configurations according to various exemplary embodiments. For example, the positive current collector may be a grid such as a mesh grid, an expanded metal grid, a photochemically etched grid, or the like.

The current collector 112 has a layer of active material 116 provided thereon (e.g., coated on the current collector). While FIGURE 2 shows that the active material 116 is provided on only one side of the current collector 112, it should be understood that a layer of active material similar or identical to that shown as active material 116 may be provided or coated on both sides of the current collector 112.

According to an exemplary embodiment, the active material 116 is a material or compound that includes lithium. The lithium included in the active material 116 may be doped and undoped during discharging and charging of the battery, respectively. According to an exemplary embodiment, the active material 116 is lithium cobalt oxide (LiCoO₂). According to other exemplary embodiments, the active material may be provided as one or more additional materials. For example, the active material may be LiMn₂O₄ or a material having the formula LiCoₓNi₍₁₋ₓ₎O₂, where x is between approximately 0.05 and 0.8. According to another exemplary embodiment, the active material is a material of the form LiNiₓCo_{y}Mn_{(1-x-y)}O₂ where x is between approximately 0.05 and 0.8 and y is between approximately 0.05 and 0.8 (e.g., LiNi_{1/3}Co_{1/3}Mn_{1/3}O₂ or LiNi_{0.8}Co_{0.1}Mn_{0.1}O₂). According to another exemplary embodiment, the active material 116 is a metal-doped variety of one of the aforementioned materials, such as a material of the form LiMₓCo_{y}Ni_{(1-x-y)}O₂, where M is aluminum or titanium and x is between approximately 0.05 and 0.3 and y is between approximately 0.1 and 0.3.

For certain applications, it may be desirable to provide a battery having a cell voltage of greater than approximately 3 volts. In such cases, a higher-voltage active material may be utilized on the positive current collector, such as a material in the form Li₂₋ₓCo_{y}Fe_{z}Mn_{4-(y+z)}O₈ (e.g., Li₂Co_{0.4}Fe_{0.4}Mn_{3.2}O₈). It is believed that such an active material may charge up to 5.2 volts versus a lithium reference electrode, making it possible to obtain an overall cell voltage of up to approximately 3.7 volts. Other relatively high-voltage active materials that may be used for the positive electrode include LiCoPO₄; LiNiPO₄; Li₂CoPO₄F; Li[Ni_{0.2}Li_{0.2}Mn₀.₆]O₂; and LiCoₓMn₂₋ₓO₄ (e.g., LiCo_{0.3}Mn_{1.7}O₄). Other high voltage active materials that may be used could be based on the compositions LiMₓMn₂₋ₓO₄ (where M = Ni or Fe with 0 < x < 0.5) or a material having the formula Li_{1-x/3}M_{0.5-x/2}Mn_{1.5+x/6}O₄ where x = 0 to 0.5 and M = Ni or Fe).

According to various other exemplary embodiments, the active material may include a material such as a material of the form Li₁₋ₓMO₂ where M is a metal (e.g., LiCoO₂, LiNiO₂, and LiMnO₂), a material of the form Li_{1-w}(M'ₓM"_{y})O₂ where M' and M" are different metals (e.g., Li(CrₓMn₁₋ₓ)O₂, Li(AlₓMn₁₋ₓ)O₂, Li(CoₓM₁₋ₓ)O₂ where M is a metal, Li(CoₓNi₁₋ₓ)O₂, and Li(CoₓFe₁₋ₓ)O₂)), a material of the form Li_{1-w}(MnₓNi_{y}Co_{z})O₂ (e.g., Li(Mn_{⅓}Ni_{⅓}Co_{⅓})O₂, Li(Mn_{⅓}Ni_{⅓}Co_{⅓-x}Mgₓ)O₂, Li(Mn_{0.4}Ni_{0.4}Co_{0.2})O₂, and Li(Mn_{0.1}Ni_{0.1}Co_{0.8})O₂), a material of the form Li_{1-w}(MnₓNiₓCo₁₋₂ₓ)O₂, a material of the form Li_{1-w}(MnₓNi_{y}Co_{z}Al_{w})O₂, a material of the form Li_{1-w}(NiₓCo_{y}Al_{z})O₂ (e.g., Li(Ni_{0.8}Co_{0.15}Al_{0.05})O₂), a material of the form Li_{1-w}(NiₓCo_{y}M_{z})O₂ where M is a metal, a material of the form Li_{1-W}(NiₓMn_{y}M_{z})O₂ where M is a metal, a material of the form Li(Ni_{x-y}MnyCr₂₋ₓ)O₄, LiMn₂O₄, a material of the form LiM'M"₂O₄ where M' and M" are different metals (e.g., LiMn_{2-y-z} Ni_{y}O₄, Li_{y}O₄, LiNiCuO₄, LiMn₁₋ₓ AlₓO₄, LiNi_{0.5}Ti_{0.5}O₄, and Li_{1.05}Al_{0.1}Mn_{1.85}O_{4-z}F_{z}), Li₂MnO₃, a material of the form LiₓV_{y}O_{z} (e.g., LiV₃O₈, LiV₂O₅, and LiV₆O₁₃), a material of the form LiMPO₄ where M is a metal or LiMₓ'M"₁₋ₓPO₄ where M' and M" are different metals (e.g., LiFePO₄, LiFeₓM₁₋ₓPO₄ where M is a metal, LiVOPO₄, and Li₃V₂(PO₄)₃, and LiMPO₄ₓ where M is a metal such as iron or vanadium and X is a halogen such as fluorine, and combinations thereof.

A binder material may also be utilized in conjunction with the layer of active material 116 to bond or hold the various electrode components together. For example, according to an exemplary embodiment, the layer of active material may include a conductive additive such as carbon black and a binder such as polyvinylidine fluoride (PVDF) or an elastomeric polymer.

According to an exemplary embodiment, the thickness of the layer of active material 116 is between approximately 0.1 µm and 3 mm. According to another exemplary embodiment, the thickness of the layer of active material 116 is between approximately 25 µm and 300 µm. According to a particular exemplary embodiment, the thickness of the layer of active material 116 is approximately 75 µm.

The negative electrode 120 includes a current collector 122 that is made of a conductive material such as a metal. According to an exemplary embodiment, the current collector 122 is aluminum or an aluminum alloy. One advantageous feature of utilizing an aluminum or aluminum alloy current collector is that such a material is relatively inexpensive and may be relatively easily formed into a current collector. Other advantageous features of using aluminum or an aluminum alloy includes the fact that such materials may have a relatively low density, are relatively highly conductive, are readily weldable, and are generally commercially available. According to another exemplary embodiment, the current collector 122 is titanium or a titanium alloy. According to another exemplary embodiment, the current collector 122 is silver or a silver alloy.

While the negative current collector 122 has been illustrated and described as being a thin foil material, the negative current collector may have any of a variety of other configurations according to various exemplary embodiments. For example, the positive current collector may be a grid such as a mesh grid, an expanded metal grid, a photochemically etched grid, a metallized polymer film, or the like.

According to an exemplary embodiment, the thickness of the current collector 122 is between approximately 100 nm and 100 µm. According to another exemplary embodiment, the thickness of the current collector 122 is between approximately 5 µm and 25 µm. According to a particular exemplary embodiment, the thickness of the current collector 122 is approximately 10 µm.

The negative current collector 122 has an active material 124 provided thereon. While FIGURE 2 shows that the active material 124 is provided on only one side of the current collector 122, it should be understood that a layer of active material similar or identical to that shown may be provided or coated on both sides of the current collector 122.

According to an exemplary embodiment, the negative active material is selected such that it has an average potential that is greater or equal to approximately 0.2 V versus Li/Li⁺ (e.g., according to one particular exemplary embodiment, the negative active material has an average potential that is greater or equal to approximately 0.3 V versus Li/Li⁺; according to a particularly preferred embodiment, the negative active material is a titanate material having an average potential that is greater or equal to approximately 1.5 V versus Li/Li⁺). The inventors have unexpectedly discovered that the use of negative electrode materials that possess a relatively high average potential versus Li/Li⁺ reduces the likelihood of lithium plating. According to one exemplary embodiment, such a negative active material is used in conjunction with a positive active material that has an average potential of greater than approximately 3 V versus Li/Li⁺ (e.g., LiCoO₂).

According to an exemplary embodiment, the negative active material 124 is a lithium titanate material such as Li₄Ti₅O₁₂ (sometimes referred to as Li₁₊ₓ[Li_{1/3}Ti_{5/3}]O₄, where 0 ≤ x < 1). Other lithium titanate materials that may be suitable for use as the negative active material may include one or more of the following lithium titanate materials: Li₂TiO₃, LiₓTi_{y}O₄ where x is between approximately 1 and 3 and y is between approximately 1.25 and 4, HₓLi_{y-x}Ti_{z}O₄ where x is between approximately 0 and 0.8, y is between approximately 0.53 and 2.7, and z is between approximately 1.3 and 2.2, Li₄Ti_{4.75}V_{0.25}O₁₂, Li₄Ti_{4.75}Fe_{0.25}O_{11.88}, Li₄Ti_{4.5}Mn_{0.5}O₁₂, Li₄MₓTi₅₋ₓO₁₂ where x is between approximately 0 and 2, Li₄₋ₓM'ₓTi_{5-y}M"_{y}O₁₂ where x is between approximately 0 and 4 and y is between approximately 0 and 2, (where M, M' and M" are metals such as nickel, cobalt, iron, manganese, vanadium, copper, chromium, molybdenum, niobium, or combinations thereof, or are three valent non-transition metal). Note that such lithium titanate spinel materials may be used in any desired state of lithiation (e.g., a material such as Li₄₊ₓTi₅O₁₂, where 0 ≤ x ≤ 3).

According to an exemplary embodiment, the lithium titanate may be provided such that at least five percent is in the form of lithium titanate nanoparticles (e.g., having a particle size of less than approximately 500 nanometers). The use of such nonoparticles is intended to provide greater surface area for doping and undoping of lithium ions.

According to other exemplary embodiments, a lithium vanadate (e.g., Li_{1.1}V₀.₉O₂) material may be used as the negative active material. Another exemplary embodiment may have the compound TiO₂ (B) with a charge discharge voltage of 2.0 - 1.0 V versus a lithium reference electrode as the negative active material. Other materials having cycling potentials that exceed that of lithium by several hundred millivolts and which may be suitable for use as the negative active material include the materials listed in Table 1. Such materials may be used alone or in combination with the lithium titanates described above and/or any of the other materials listed in Table 1.

**TABLE 1**

| | | **Cycling Potentials (vs Li)** | | |
|---|---|---|---|---|
| **Class** | **Compound** | **Vmin** | **Vmax** | **Vavg** |
| Oxides | TiO₂ (B) | 0.8 | 2.0 | 1.45 |
| Oxides | TiO₂ (Anatase) | 1.4 | 2 | 1.80 |
| Oxides | WO₂ | 0.6 | 1.3 | 0.80 |
| Oxides | WO₃ | 0.5 | 2.6 | 1.0 |
| Oxides | MoO₂ | 1.3 | 2 | 1.60 |
| Oxides | Nb₂O₅ | 1.0 | 2 | 1.50 |
| Oxides | LiWO₂ | | | 0.75 |
| Oxides | LiₓMoO₂ | 0.8 | 2 | 1.60 |
| Oxides | V₆O₁₃ | | | 2.30 |
| Oxides | Li₆Fe₂O₃ | | | 0.75 |
| Oxides | LiFeO₂ | 1.0 | 3.0 | 2.0 |
| Oxides | Fe₂O₃ | 0.2 | 2.0 | 0.75 |
| Oxides | MO where M = Co, Ni, Cu or Fe | | | 0.8 - 1.5 |
| Oxides | MCo₂O₄ with M comprising Mg, Al, Ca, V, Cr, Mn, Fe, Co, Ni, Cu, Zn | | | 0.5 - 2.0 |
| Sulfides | FeS₂ | 1.3 | 1.9 | 1.65 |
| Sulfides | MoS₂ | | | 1.75 |
| Sulfides | TiS₂ | | | 2.00 |
| Alloys | Sn-Bi | | | 0.75 |
| Alloys | Alloys comprising of Al, Si or Sn and other elements | | | 0.30 |
| Alloys | Sn-Co-C | | | 0.30 |
| Alloys | Sb | | | 0.90 |
| Alloys | NbSe₃ | | | 1.95 |
| Alloys | Bi | | | 0.80 |
| Alloys | In | | | 0.60 |
| Alloys | LixAl | | | 0.36 |
| Alloys | LixSn | 0 | 1.3 | 0.50 |
| Alloys | Sn-Sb | | | 0.0-1.0 |
| Polymers | Poly(phenylquinoline) | | | 1.50 |
| Polymers | Polyparaphenylene | | | 0.70 |
| Polymers | Polyacetylene | | | 1.00 |
| Vanadates | LiₓMVO₄ where M = Ni, Co, Cd, Zn | | | 2.0-0.5 |
| Vanadate | LiVO₂ | | | 0.2 |

A binder material may also be utilized in conjunction with the layer of active material 124. For example, according to an exemplary embodiment, the layer of active material may include a binder such as polyvinylidine fluoride (PVDF) or an elastomeric polymer. The active material 124 may also include a conductive material such as carbon (e.g., carbon black) at weight loadings of between zero and ten percent to provide increased electronic conductivity.

According to various exemplary embodiments, the thickness of the active material 124 is between approximately 0.1 µm and 3 mm. According to other exemplary embodiments, the thickness of the active material 124 may be between approximately 25 µm and 300 µm. According to another exemplary embodiment, the thickness of the active material 124 may be between approximately 20 µm and 90 µm, and according to a particular exemplary embodiment, approximately 75 µm.

Lithium plating occurs when the potential of the negative electrode versus a lithium reference electrode reaches 0 volts, and is a well-known phenomenon that can lead to loss in performance of lithium-ion batteries. When used in a negative electrode of a lithium-ion battery, lithium titanate active materials cycle lithium at a potential plateau of about 1.55 volts (which is substantially higher than graphitic carbon, which cycles lithium at approximately 0.1 volts in the fully charged state). As a result, batteries using lithium titanate as a negative active material are less susceptible to lithium plating than those using carbon-based materials for the negative active material.

One advantageous feature of utilizing a negative electrode active material such as a lithium titanate material or another material having an average potential that is greater or equal to approximately 0.2 V versus a lithium reference electrode is that more favorable design rules may be possible for rechargeable (i.e., secondary) lithium-ion batteries. For example, rechargeable lithium-ion batteries using carbon-based negative active materials are typically fabricated such that the capacity of the electrodes is balanced (i.e., the capacities of the positive electrode and negative electrode are equal) or positive-limited (i.e., the capacity of the positive electrode is less than that of the negative electrode). In contrast, according to an exemplary embodiment in which a battery utilizes a negative electrode active material such as a lithium titanate material or another material having an average potential that is greater or equal to approximately 0.2 volts versus a lithium reference electrode, rechargeable lithium-ion batteries may be fabricated with a negative-limited design in which the capacity of the negative electrode is less than that of the positive electrode without increasing the expected capacity fade for the battery, as described, for example, in U.S. Patent Application No. 12/240,652 filed September 29, 2008 (the entire disclosure of which is incorporated herein by reference).

Still referring to FIGURE 2, a separator 150 is provided intermediate or between the positive electrode 110 and the negative electrode 120. According to an exemplary embodiment, the separator 150 is a polymeric material such as a polypropylene/polyethelene copolymer or another polyolefin multilayer laminate that includes micropores formed therein to allow electrolyte and lithium ions to flow from one side of the separator to the other. The thickness of the separator 150 is between approximately 10 micrometers (µm) and 50 µm according to an exemplary embodiment. According to a particular exemplary embodiment, the thickness of the separator is approximately 25 µm, and the average pore size of the separator is between approximately 0.02 µm and 0.1 µm.

An electrolyte 130 is provided intermediate or between the positive and negative electrodes to provide a medium through which lithium ions may travel. According to an exemplary embodiment, the electrolyte may be a liquid (e.g., a lithium salt dissolved in one or more non-aqueous solvents). According to an exemplary embodiment, the electrolyte may be a mixture of ethylene carbonate (EC), ethylmethyl carbonate (EMC) and a 1.0 M salt of LiPF₆. For example, according to one particular exemplary embodiment, the electrolyte may include a 3:7 mixture of ethylene carbonate to ethylmethyl carbonate (EC:EMC) in a 1.0 M salt of LiPF₆. In another exemplary embodiment, the electrolyte may include a 3:7 mixture of ethylene carbonate to ethylmethyl carbonate (EC:EMC) in a 1.1 M salt of LiPF₆.

Different electrolytes may be used according to other exemplary embodiments. For example, the electrolyte may include other constituents that are commonly used in lithium batteries (e.g., propylene carbonate, dimethyl carbonate, vinylene carbonate, lithium bis-oxalatoborate salt (sometimes referred to as LiBOB), etc.). According to another exemplary embodiment, the electrolyte may be a lithium salt dissolved in a polymeric material such as poly(ethylene oxide) or silicone. According to another exemplary embodiment, the electrolyte may be an ionic liquid such as N-methyl-N-alkylpyrrolidinium bis(trifluoromethanesulfonyl)imide salts. According to another exemplary embodiment, the electrolyte may include a polypropylene carbonate solvent and a lithium bis-oxalatoborate salt. According to other exemplary embodiments, the electrolyte may comprise one or more of a PVDF copolymer, a PVDF-polyimide material, and organosilicon polymer, a thermal polymerization gel, a radiation cured acrylate, a particulate with polymer gel, an inorganic gel polymer electrolyte, an inorganic gel-polymer electrolyte, a PVDF gel, polyethylene oxide (PEO), a glass ceramic electrolyte, phosphate glasses, lithium conducting glasses, and lithium conducting ceramics, among others. It should be noted that according to an exemplary embodiment, the electrolyte does not include a molten salt.

According to an exemplary embodiment, the electrolyte 130 includes a trimethoxyboroxine (TMOBX) additive. According to other exemplary embodiments, the electrolyte may include other additives that are borate or borane compounds that function as boron-based Lewis acids. Examples of such borate or borane compounds include compounds containing boroxine rings (e.g., trimethylboroxin as well as trimethoxyboroxine (TMOBX) or its derivatives), compounds including boroxine rings with polyalkylene oxide chains (e.g., tris(poly(oxyethylene)) boroxine), and compounds having boroxine rings with substituted or unsubstituted phenyl rings (e.g., triphenyl boroxine, tris(4-fluorophenyl) boroxine, and tris(pentafluorophenyl) boroxine). Other additives may include derivatives of boronate esters and borinate esters such as difluorophenoxy methyl borane, dihexafluoroisopropoxy methyl borane, dihexafluoroisopropoxy phenyl borane.

Compounds such as TMOBX have been reported as having utility as electrolyte additives in lithium-ion batteries that use carbon-based negative electrode active materials. In batteries having carbonaceous electrodes and a LiPF₆ electrolyte, LiF may form on the surface of the carbonaceous material. The deposited LiF is not an advantageous component of a stable ionically conductive layer (which may be referred to as a solid-electrolyte interphase (SEI) layer) that is typically formed on the negative electrode, and is believed to undesirably contribute to capacity fade in the battery. The use of TMOBX or similar materials has been reported to aid in preventing the formation of LiF on the surface of the carbonaceous material and to assist in forming a more stable SEI layer on the carbonaceous negative electrode.

In contrast to lithium-ion batteries that utilize carbonaceous negative electrodes, it has been reported by various sources that SEI layer formation is not significant in batteries using lithium titanate negative electrode active materials, perhaps due to the fact that the lithium titanate electrodes operate at a significantly higher average potential (e.g., 1.5 V versus a lithium reference electrode) as compared to carbon-based electrodes, which have potentials on the order of 0.15 V versus a lithium reference electrode (see, e.g., Belharouak et al., "On the Safety of the Li4Ti5O12/LiMn2O4 Lithium-Ion Battery System," Journal of The Electrochemical Society, 154 (12), A1083-A1087 (2007) ("alternative anodes to graphite have been suggested, such as the spinel Li₄Ti₅O₁₂, which operates at 1.5 V vs Li metal... at this high cutoff voltage, the solid electrolyte interface (SEI) film associated with the graphite anode does not form, because the rejection of the organic species and transition metal ions only occurs below 1 V.") and Christensen et al., "Optimization of Lithium Titanate Electrodes for High-Power Cells," Journal of The Electrochemical Society, 153 (3) A560-A565 (2006)("Lithium titanate spinel... possesses many advantages over graphite. Its open-circuit potential (OCP) is much higher, around 1.5 V vs Li. Thus, both lithium deposition and solvent decomposition are easily avoided, even at high rates.... Furthermore, there is no film present to limit the rate of lithium insertion and extraction.")).

Because batteries using lithium titanate negative active materials do not have significant SEI layer formation, it would not be expected that the use of TMOBX or similar materials would be useful in reducing the occurrence of capacity fade in such batteries.

It has unexpectedly been discovered by the inventors of the present application, however, that there are other previously undiscovered advantages that may be obtained from the addition of TMOBX or other borate or borate compounds (e.g., boron-based Lewis acids) to batteries that use lithium titanate or similar negative electrode active materials (as described in greater detail above). These unforeseen benefits improve battery performance and component stability, and also allow for more efficient manufacturing processes.

Lithium titanate is known to be a hygroscopic material (i.e., it picks up moisture readily even during the manufacturing of the electrodes/battery). When used in a lithium-ion battery, this moisture may released into the battery electrolyte, which in turn may contribute to the formation of chemicals (POF₃, HF, LiF) that lead to side reactions with adverse effects. Some of these chemicals (e.g., HF) may react with the electrolyte, leading to gas formation and battery swelling. The cell may also experience an impedance rise, which is suspected to be due to deposition of LiF at the positive electrode. Another observation is that when such cells are discharged to 0.0 V, a black residue is formed or deposited on the battery case. This black residue appears to contain organic material from the electrolyte and corrosion products from the case, indicating the occurrence of unwanted side reactions between the electrolyte and the case.

One strategy for reducing the moisture in the lithium titanate active material involves subjecting the negative electrode to a heat treatment for an extended period of time. There also numerous practical problems with this solution, including the fact that the heat treatment increases the production cycle time and appears to be detrimental to the mechanical properties of the electrode. Even after such heat treatment is complete, additional moisture may be picked up by the electrode during the remaining steps in the manufacturing process unless careful controls are put in place, thus potentially reducing the efficacy of the heat treatment. The heat treatment process adds substantial time and cost to the manufacture of the battery, and does not appear to fully eliminate the detrimental effects of the moisture, including increased battery impedance and the formation of black residue on the case.

It has been experimentally determined by the inventors of the present application that the addition of a boron-based Lewis acid (e.g., TMOBX) to the electrolyte in batteries having lithium titanate negative active materials may advantageously allow for substantially reduced battery swelling as compared to batteries that do not use such an electrolyte additive. Table 2 includes data illustrating the improvement in case swelling for batteries having varying percentages of TMOBX addition (0.0, 0.3, 0.6, and 0.9) that were heat treated using different temperatures (T₁ and T₂, where T₁ < T₂) and times (t₁ < t₂ < t₃ and t₁' < t₂' < t₃'). Each of the batteries tested had a similar configuration (with the exception of the TMOBX additive percentage), with a case made from stainless steel, positive electrodes using a LiCoO₂ active material formed on an aluminum current collector, negative electrodes using a lithium titanate active material (i.e., Li₄Ti₅O₁₂) formed on an aluminum current collector, and an electrolyte that was a 3:7 mixture of ethylene carbonate to ethylmethyl carbonate (EC:EMC) in a 1.0 M salt of LiPF₆.

**TABLE 2**

| **Heat treatment temperature** | **Heat treatment duration** | **TMOBX (wt %)** | **Normalized swelling (% of max observed)** |
|---|---|---|---|
| T1 | t1 | 0.3 | 29.58 |
| T1 | t1 | 0.6 | 18.76 |
| T1 | t1 | 0.9 | 20.31 |
| T1 | t2 | 0.3 | 18.54 |
| T1 | t2 | 0.6 | 15.89 |
| T1 | t2 | 0.9 | 23.40 |
| T1 | t3 | 0.3 | 18.10 |
| T1 | t3 | 0.6 | 17.66 |
| T1 | t3 | 0.9 | 22.19 |
| T2 | t1' | 0.0 | 100.00 |
| T2 | t1' | 0.3 | 22.30 |
| T2 | t1' | 0.6 | 25.39 |
| T2 | t2' | 0.0 | 66.67 |
| T2 | t2' | 0.3 | 22.74 |
| T2 | t2' | 0.6 | 36.64 |
| T2 | t3' | 0.0 | 75.94 |
| T2 | t3' | 0.3 | 28.26 |
| T2 | t3' | 0.6 | 27.37 |

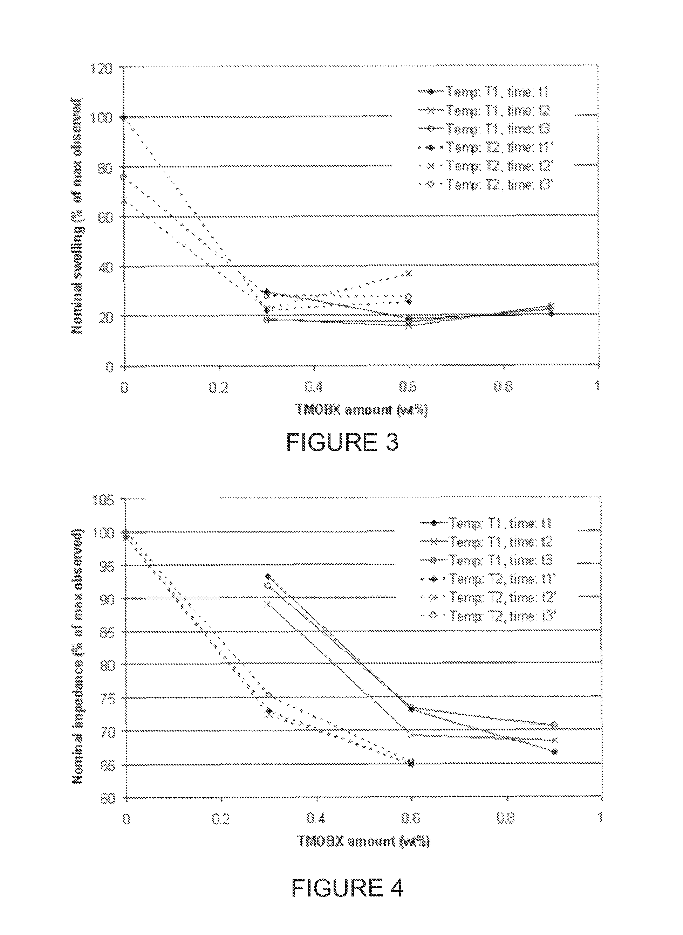

FIGURE 3 graphically illustrates the effect that the addition of TMOBX at various levels to the electrolyte for batteries having lithium titanate negative electrode active materials, as shown by the data in Table 2. Without TMOBX, increasing the heat treatment time appears to lead to some moderate decrease in battery swelling. More substantial reductions in swelling were obtained, however, at TMOBX levels of 0.3, 0.6, and 0.9 weight percent as compared to batteries without TMOBX, regardless of the temperature and time parameters of the heat treatment.

FIGURE 4 illustrates the impedance of the batteries described with respect to FIGURE 3. As illustrated, increasing TMOBX levels appears to act to lower impedance of the batteries. This in turn would be expected to improve the rate capability of the batteries, thus enabling quicker charging and high power discharging for the batteries. These results may be obtained without the need to increase the temperature or time of the heat treatments.

The inventors believe that the beneficial effects of additives such as TMOBX are not limited to cells where lithium titanate is the source of moisture. TMOBX can mitigate the detrimental effects of moisture in a cell, regardless of the source of moisture. If the moisture content in the electrolyte solvent is high (e.g., > 100 ppm), it would react with the salt (LiPF₆) to yield products that would cause cell swelling due to gas generation, cause degradation of the electrode active materials and accelerate corrosion. Additives such as TMOBX co-ordinate with the anion (PF₆⁻) and prevent its dissociation due to moisture into harmful products. Hence use of additives such as TMOBX may go beyond a cell chemistry with Li₄Ti₅O₁₂ negative active material and may be applicable in general when any of the cell constituents are hygroscopic.

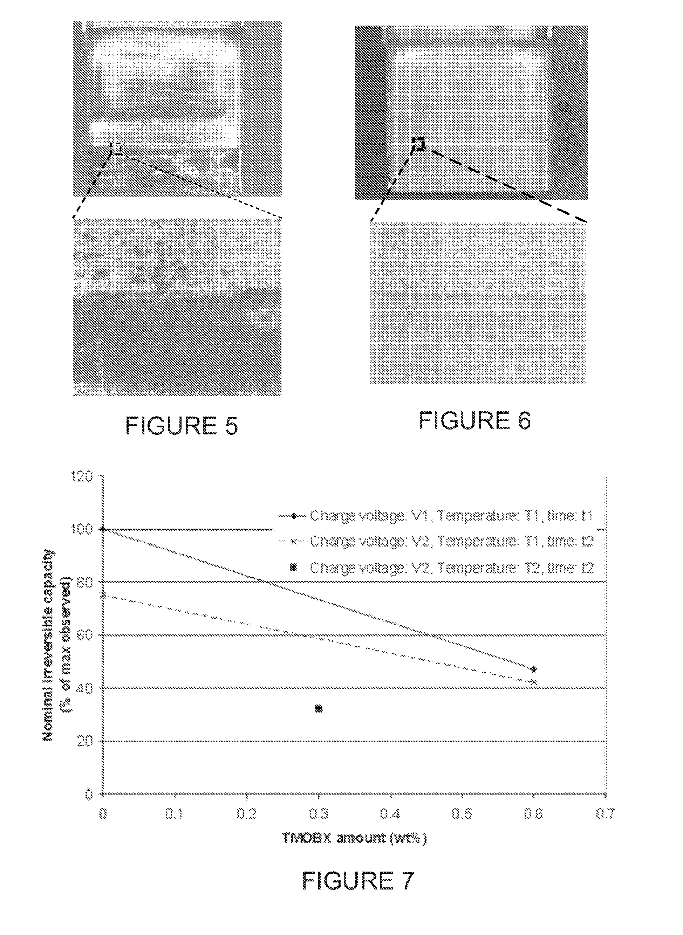

The addition of TMOBX to the electrolyte in batteries having lithium titanate negative electrodes also has a desirable effect of eliminating undesirable side reactions between the electrolyte and the battery case that may cause component degradation, as shown in FIGURES 5 and 6. As shown in FIGURE 5, where TMOBX is not used, black residue appears on the case after cycling (as shown in the lower detail view of the case). FIGURE 6 shows a similar battery having TMOBX added at a level of 0.3 weight percent to the electrolyte. It is believed that the addition of TMOBX prevents the undesirable side reaction with the case, and no black residue is evident on the case after similar cycling. Each of the batteries tested had a similar configuration (with the exception of the TMOBX additive percentage), with a case made from stainless steel, positive electrodes using a LiCoO₂ active material formed on an aluminum current collector, negative electrodes using a lithium titanate active material (i.e., Li₄Ti₅O₁₂) formed on an aluminum current collector, and an electrolyte that was a 3:7 mixture of ethylene carbonate to ethylmethyl carbonate (EC:EMC) in a 1.0 M salt of LiPF₆.

The inventors have unexpectedly discovered that numerous advantages may be obtained by adding TMOBX to electrolyte in lithium-ion batteries that utilize lithium titanate or similar active materials on the negative electrode. Decreased impedance allows for increased power capability and shorter recharge times. The reduction of cell swelling improves energy density as compared to batteries that do not use TMOBX additives. Manufacturing time (and thus, manufacturing cost) can be substantially reduced, since the heat treatment required for the negative electrode may be reduced, for example, by more than 80 percent. Component longevity may also be improved, even where cells are subjected to repeated deep discharge conditions, since undesirable corrosion of the battery case due to interactions with the electrolyte may be reduced or eliminated.

The inventors have also discovered that the use of TMOBX in the cell reduces the irreversible capacity for the battery. FIGURE 7 shows the variation in first cycle irreversible capacity with addition of TMOBX, for cells having cases made from stainless steel, positive electrodes using a LiCoO₂ active material formed on an aluminum current collector, negative electrodes using a lithium titanate active material (i.e., Li₄Ti₅O₁₂) formed on an aluminum current collector, and an electrolyte that was a 3:7 mixture of ethylene carbonate to ethylmethyl carbonate (EC:EMC) in a 1.0 M salt of LiPF₆. FIGURE 7 shows data for cells charged to voltages of V1 or V2 volts (V1 > V2), with the negative electrode heat treated at temperatures T1 or T2 (T1 < T2), and heat treated for durations of t1 or t2 hours (t1 < t2). For these cells, addition of TMOBX (e.g., at a level of 0.6 weight percent) leads to reduction in irreversible capacity, as compared to cells with no TMOBX. Heat treatment of the negative electrode at higher temperature or longer times also leads to a reduction in the irreversible capacity, but the effect of TMOBX appears to outweigh that of heat treatment. Thus, it is expected that the data point for 0.3 weight percent TMOBX addition likely reflects the combination of the TMOBX addition with the additional effects from increasing the heat treatment temperature and time.

In general, reducing irreversible capacity is highly desirable, since it allows for the availability of greater reversible capacity for the cell. The inventors believe, without being limited to a particular theory, that the moisture-mitigating effect of TMOBX and its effect on stabilization of the salt and electrolyte serve as the underlying causes for the reduced irreversible capacity. As the cell is charged, the positive electrode is driven to more oxidizing potentials. Presence of moisture and products of reaction of the electrolyte/salt with the moisture lead to an acceleration of oxidative side-reactions at the positive electrode, which yield high irreversible capacity. Addition of TMOBX reduces these side-reactions and leads to lower irreversible capacity.

The inventors also believe that the ability of TMOBX to prevent side-reactions at the positive electrode may become useful when higher voltage positive active materials are used in a cell. With high voltage positive active materials, the oxidative side-reactions in the cell lead to impedance rise and a deterioration in the rate-capability. TMOBX can help mitigate this effect by stabilizing the electrolyte components that are more likely to undergo oxidation. Thus, TMOBX may be highly beneficial additive when using high voltage positive active materials such as LiNi_{0.5}Mn_{1.5}O₄, LiCoPO₄, LiMnPO₄, LiVPO₄, Li₂MM'₃O₈, and LiMM'O₄ (where, M and M' are transition metals such as Cr, Mn, Ti, Fe, Co, Ni, V, Cu).

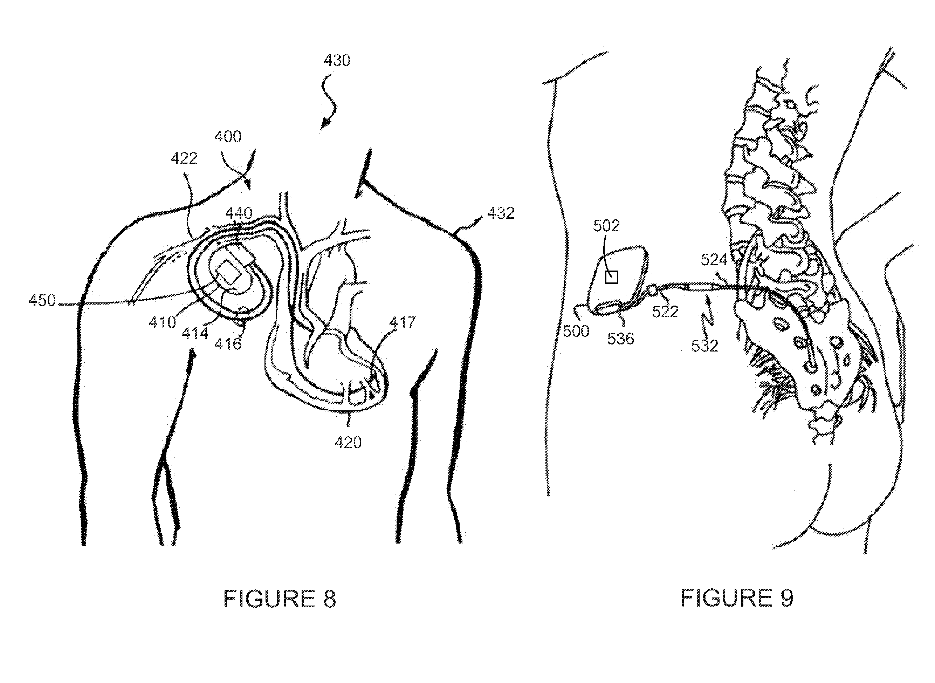

The batteries described herein may find utility in a variety of applications, including in implantable medical devices (IMDs). FIGURE 8 illustrates a schematic view of a system 400 (e.g., an implantable medical device) implanted within a body or torso 432 of a patient 430. The system 400 includes a device 410 in the form of an implantable medical device that for purposes of illustration is shown as a defibrillator configured to provide a therapeutic high voltage (e.g., 700 volt) treatment for the patient 430.

The device 410 includes a container or housing 414 that is hermetically sealed and biologically inert according to an exemplary embodiment. The container may be made of a conductive material. One or more leads 416 electrically connect the device 410 and to the patient's heart 420 via a vein 422. Electrodes 417 are provided to sense cardiac activity and/or provide an electrical potential to the heart 420. At least a portion of the leads 416 (e.g., an end portion of the leads shown as exposed electrodes 417) may be provided adjacent or in contact with one or more of a ventricle and an atrium of the heart 420.

The device 410 includes a battery 440 provided therein to provide power for the device 410. The size and capacity of the battery 440 may be chosen based on a number of factors, including the amount of charge required for a given patient's physical or medical characteristics, the size or configuration of the device, and any of a variety of other factors. According to an exemplary embodiment, the battery is a 5 mAh battery. According to another exemplary embodiment, the battery is a 300 mAh battery. According to various other exemplary embodiments, the battery may have a capacity of between approximately 1 and 1000 mAh.

According to other exemplary embodiments, more than one battery may be provided to power the device 410. In such exemplary embodiments, the batteries may have the same capacity or one or more of the batteries may have a higher or lower capacity than the other battery or batteries. For example, according to an exemplary embodiment, one of the batteries may have a capacity of approximately 500 mAh while another of the batteries may have a capacity of approximately 75 mAh.

According to an exemplary embodiment, the battery may be configured such that it may be charged and recharged using an inductive charging system in which a primary or external coil is provided at an exterior surface of a portion of the body (either proximate or some distance away from the battery) and a secondary or internal coil is provided below the skin adjacent the primary coil.

According to another exemplary embodiment shown in FIGURE 9, an implantable neurological stimulation device 500 (an implantable neuro stimulator or INS) may include a battery 502 such as those described above with respect to the various exemplary embodiments. Examples of some neuro stimulation products and related components are shown and described in a brochure titled "Implantable Neurostimulation Systems" available from Medtronic, Inc.

An INS generates one or more electrical stimulation signals that are used to influence the human nervous system or organs. Electrical contacts carried on the distal end of a lead are placed at the desired stimulation site such as the spine or brain and the proximal end of the lead is connected to the INS. The INS is then surgically implanted into an individual such as into a subcutaneous pocket in the abdomen, pectoral region, or upper buttocks area. A clinician programs the INS with a therapy using a programmer. The therapy configures parameters of the stimulation signal for the specific patient's therapy. An INS can be used to treat conditions such as pain, incontinence, movement disorders such as epilepsy and Parkinson's disease, and sleep apnea. Additional therapies appear promising to treat a variety of physiological, psychological, and emotional conditions. Before an INS is implanted to deliver a therapy, an external screener that replicates some or all of the INS functions is typically connected to the patient to evaluate the efficacy of the proposed therapy.

The INS 500 includes a lead extension 522 and a stimulation lead 524. The stimulation lead 524 is one or more insulated electrical conductors with a connector 532 on the proximal end and electrical contacts (not shown) on the distal end. Some stimulation leads are designed to be inserted into a patient percutaneously, such as the Model 3487A Pisces-Quad^{®} lead available from Medtronic, Inc. of Minneapolis Minn., and stimulation some leads are designed to be surgically implanted, such as the Model 3998 Specify^{®} lead also available from Medtronic.

Although the lead connector 532 can be connected directly to the INS 500 (e.g., at a point 536), typically the lead connector 532 is connected to a lead extension 522. The lead extension 522, such as a Model 7495 available from Medtronic, is then connected to the INS 500.

Implantation of an INS 500 typically begins with implantation of at least one stimulation lead 524, usually while the patient is under a local anesthetic. The stimulation lead 524 can either be percutaneously or surgically implanted. Once the stimulation lead 524 has been implanted and positioned, the stimulation lead's 524 distal end is typically anchored into position to minimize movement of the stimulation lead 524 after implantation. The stimulation lead's 524 proximal end can be configured to connect to a lead extension 522.

The INS 500 is programmed with a therapy and the therapy is often modified to optimize the therapy for the patient (i.e., the INS may be programmed with a plurality of programs or therapies such that an appropriate therapy may be administered in a given situation).

A physician programmer and a patient programmer (not shown) may also be provided to allow a physician or a patient to control the administration of various therapies. A physician programmer, also known as a console programmer, uses telemetry to communicate with the implanted INS 500, so a clinician can program and manage a patient's therapy stored in the INS 500, troubleshoot the patient's INS system, and/or collect data. An example of a physician programmer is a Model 7432 Console Programmer available from Medtronic. A patient programmer also uses telemetry to communicate with the INS 500, so the patient can manage some aspects of her therapy as defined by the clinician. An example of a patient programmer is a Model 7434 Itrel^{®} 3 EZ Patient Programmer available from Medtronic.

According to an exemplary embodiment, a battery provided as part of the INS 500 may be configured such that it may be charged and recharged using an inductive charging system in which a primary or external coil is provided at an exterior surface of a portion of the body (either proximate or some distance away from the battery) and a secondary or internal coil is provided below the skin adjacent the primary coil.

While the medical devices described herein (e.g., systems 400 and 500) are shown and described as a defibrillator and a neurological stimulation device, it should be appreciated that other types of implantable medical devices may be utilized according to other exemplary embodiments, such as pacemakers, cardioverters, cardiac contractility modules, drug administering devices, diagnostic recorders, cochlear implants, and the like for alleviating the adverse effects of various health ailments.

It is also contemplated that the medical devices described herein may be charged or recharged when the medical device is implanted within a patient. That is, according to an exemplary embodiment, there is no need to disconnect or remove the medical device from the patient in order to charge or recharge the medical device.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

It is important to note that the construction and arrangement of the batteries and cells and the methods for forming such batteries as shown and described in the various exemplary embodiments is illustrative only. Although only a few embodiments have been described in detail in this disclosure, those skilled in the art who review this disclosure will readily appreciate that many modifications are possible without materially departing from the novel teachings and advantages of the subject matter recited in the claims. Accordingly, all such modifications are intended to be included within the scope of the present invention as defined in the appended claims. The order or sequence of any process or method steps may be varied or re-sequenced according to other exemplary embodiments. Other substitutions, modifications, changes, and omissions may be made in the design, operating conditions, and arrangement of the various exemplary embodiments without departing from the scope of the present inventions as expressed in the appended claims.

## Claims

1. A rechargeable lithium-ion battery comprising:
a positive electrode;
a negative electrode comprising a lithium titanate active material;
a separator provided between the positive electrode and the negative electrode;
an electrolyte; and
an electrolyte additive comprising at least one boroxine ring.

2. The rechargeable lithium-ion battery of claim 1, wherein the additive comprises trimethoxyboroxine.

3. The rechargeable lithium-ion battery of claim 2, wherein the lithium titanate active material comprises Li₄Ti₅O₁₂.

4. The rechargeable lithium-ion battery of claim 2, wherein the additive is present in the electrolyte at a level of between approximately 0.3 and 0.9 weight percent.

5. The rechargeable lithium-ion battery of claim 2, wherein the electrolyte comprises LiPF₆.

6. The rechargeable lithium-ion battery of claim 5, wherein the electrolyte comprises a mixture of ethylene carbonate and ethylmethyl carbonate.

7. The rechargeable lithium-ion battery of claim 2, wherein the lithium titanate active material cycles lithium at a potential of greater than 1.5 volts versus a lithium reference electrode.

8. The rechargeable lithium-ion battery of claim 2, wherein the positive electrode comprises at least one active material selected from the group consisting of LiCoO₂ and LiMn₂O₄.

9. The rechargeable lithium-ion battery of claim 8, wherein the positive electrode comprises LiCoO₂.

10. The rechargeable lithium-ion battery of claim 2, wherein the positive electrode comprises at least one active material selected from the group consisting of LiMn₂O₄, LiNi_{1/3}Co_{1/3}Mn_{1/3}O₂, LiFePO₄, and LiNi_{0.8}Co_{0.15}Al_{0.05}O₂.

11. The rechargeable lithium-ion battery of claim 2, wherein the positive electrode comprises an active material selected from the group consisting of LiCoₓNi₍₁₋ₓ₎O₂ (where x is between approximately 0.05 and 0.8), LiNiₓCo_{y}Mn_{(1-x-y)}O₂ (where x is between approximately 0.05 and 0.8 and y is between approximately 0.05 and 0.8), LiAlₓCo_{y}Ni_{(1-x-y)}O₂ (where x is between approximately 0.05 and 0.3 and y is between approximately 0.1 and 0.3), and LiTiₓCo_{y}Ni_{(1-x-y)}O₂ (where x is between approximately 0.05 and 0.3 and y is between approximately 0.1 and 0.3).

12. The rechargeable lithium-ion battery of claim 2, wherein the positive electrode comprises at least one active material selected from the group consisting of LiNi_{0.5}Mn_{1.5}O₄, LiCoPO₄, LiMnPO₄, LiVPO₄, Li₂MM'₃O₈, and LiMM'O₄ where M and M' are transition metals selected from the group consisting of Cr, Mn, Ti, Fe, Co, Ni, V, and Cu.

13. The rechargeable lithium-ion battery of claim 2, further comprising a case comprising stainless steel.

14. The rechargeable lithium-ion battery of claim 2, wherein the positive electrode and the negative electrode are wound electrodes.

15. The rechargeable lithium-ion battery of claim 2, further comprising a case comprising titanium.

## Patentansprüche

1. Wiederaufladbare Lithiumionen-Batterie, mit:
einer positiven Elektrode;
einer negativen Elektrode, die ein aktives Lithiumtitanat-Material enthält;
einem Separator, der zwischen der positiven Elektrode und der negativen Elektrode vorgesehen ist;
einem Elektrolyt; und
einem Elektrolytadditiv, das wenigstens einen Boroxin-Ring enthält.

2. Wiederaufladbare Lithiumionen-Batterie nach Anspruch 1, wobei das Additiv Trimethoxy-Boroxin enthält.

3. Wiederaufladbare Lithiumionen-Batterie nach Anspruch 2, wobei das aktive Lithiumtitanat-Material Li₄Ti₅O₁₂ enthält.

4. Wiederaufladbare Lithiumionen-Batterie nach Anspruch 2, wobei das Additiv in dem Elektrolyt in einem Umfang im Bereich von ungefähr 0,3 bis 0,9 Gewichtsprozent vorhandnen ist.

5. Wiederaufladbare Lithiumionen-Batterie nach Anspruch 2, wobei der Elektrolyt LiPF₆ enthält.

6. Wiederaufladbare Lithiumionen-Batterie nach Anspruch 5, wobei der Elektrolyt ein Gemisch aus Ethlyencarbonat und Ethylmethyl-Carbonat enthält.

7. Wiederaufladbare Lithiumionen-Batterie nach Anspruch 2, wobei das aktive Lithiumtitanat-Material das Lithium zyklisch auf ein Potential von mehr als 1,5 Volt in Bezug auf eine Lithium-Referenzelektrode bringt.

8. Wiederaufladbare Lithiumionen-Batterie nach Anspruch 2, wobei die positive Elektrode wenigstens ein aktives Material enthält, das aus der Gruppe gewählt ist, die aus LiCoO₂ und LiMn₂O₄ besteht.

9. Wiederaufladbare Lithiumionen-Batterie nach Anspruch 8, wobei die positive Elektrode LiCoO₂ enthält.

10. Wiederaufladbare Lithiumionen-Batterie nach Anspruch 2, wobei die positive Elektrode wenigstens ein aktives Material enthält, das aus der Gruppe gewählt ist, die aus LiMn₂O₄, LiNi_{1/3}Co_{1/3}Mn_{1/3}O₂, LiFePO₄ und LiNi_{0,8}Co_{0,15}Al_{0,05}O₂ besteht.

11. Wiederaufladbare Lithiumionen-Batterie nach Anspruch 2, wobei die positive Elektrode ein aktives Material enthält, das aus der Gruppe gewählt ist, die aus LiCoₓNi₍₁₋ₓ₎O₂ (wobei x im Bereich von ungefähr 0,05 bis 0,8 liegt), LiNiₓCo_{y}Mn_{(1-x-y)}O₂ (wobei x im Bereich von ungefähr 0,05 bis 0,8 liegt und y im Bereich von ungefähr 0,05 bis 0,8 liegt), LiAlₓCo_{y}Ni_{(1-x-y)}O₂ (wobei x im Bereich von ungefähr 0,05 bis 0,3 liegt und y im Bereich von ungefähr 0,01 bis 0,3 liegt), und LiTiₓCo_{y}Ni_{(1-x-y)}O₂ (wobei x im Bereich von ungefähr 0,05 bis 0,3 liegt und y im Bereich von ungefähr 0,1 bis 0,3 liegt) besteht.

12. Wiederaufladbare Lithiumionen-Batterie nach Anspruch 2, wobei die positive Elektrode wenigstens ein aktives Material enthält, das aus der Gruppe gewählt ist, die aus LiNi_{0,5}Mn_{1,5}O₄, LiCoPO₄, LiMnPO₄, LiVPO₄, Li₂MM'₃O₈ und LiMM'O₄ besteht, wobei M und M' Übergangsmetalle sind, die aus der Gruppe gewählt sind, die aus Cr, Mn, Ti, Fe, Co, Ni, V und Cu besteht.

13. Wiederaufladbare Lithiumionen-Batterie nach Anspruch 2, die ferner ein Gehäuse enthält, das Edelstahl enthält.

14. Wiederaufladbare Lithiumionen-Batterie nach Anspruch 2, wobei die positive Elektrode und die negative Elektrode gewickelte Elektroden sind.

15. Wiederaufladbare Lithiumionen-Batterie nach Anspruch 2, die ferner ein Gehäuse enthält, das Titan enthält.

## Revendications

1. Batterie au lithium-ion rechargeable comportant :
une électrode positive ;
une électrode négative comportant une matière active à base de titanate de lithium ;
un séparateur disposé entre l'électrode positive et
l'électrode négative ;
un électrolyte ; et
un additif d'électrolyte comportant au moins une bague en boroxine.

2. Batterie au lithium-ion rechargeable selon la revendication 1, dans laquelle l'additif comporte de la triméthoxy-boroxine.

3. Batterie au lithium-ion rechargeable selon la revendication 2, dans laquelle la matière active à base de titanate de lithium comporte Li₄Ti₅O₁₂.

4. Batterie au lithium-ion rechargeable selon la revendication 2, dans laquelle l'additif est présent dans l'électrolyte à un niveau compris entre approximativement 0,3 et 0,9 pour-cent en poids.

5. Batterie au lithium-ion rechargeable selon la revendication 2, dans laquelle l'électrolyte comporte LiPF₆.

6. Batterie au lithium-ion rechargeable selon la revendication 5, dans laquelle l'électrolyte comporte un mélange de carbonate d'éthylène et de carbonate d'éthylméthyle.

7. Batterie au lithium-ion rechargeable selon la revendication 2, dans laquelle la matière active à base de titanate de lithium recycle le lithium à un potentiel supérieur à 1,5 volt par rapport à une électrode de référence au lithium.

8. Batterie au lithium-ion rechargeable selon la revendication 2, dans laquelle l'électrode positive comporte au moins une matière active choisie parmi le groupe constitué de LiCoO₂ et LiMn₂O₄.

9. Batterie au lithium-ion rechargeable selon la revendication 8, dans laquelle l'électrode positive comporte LiCoO₂.

10. Batterie au lithium-ion rechargeable selon la revendication 2, dans laquelle l'électrode positive comporte au moins une matière active choisie parmi le groupe constitué de LiMn₂O₄, LiNi_{1/3}Co_{1/3}Mn_{1/3}O₂, LiFePO₄ et Li-Ni_{0,8}Co_{0,15}Al_{0,05}O_{2.}

11. Batterie au lithium-ion rechargeable selon la revendication 2, dans laquelle l'électrode positive comporte une matière active choisie parmi le groupe constitué de LiCoₓNi₍₁₋ₓ₎O₂ (où x est approximativement compris entre 0,05 et 0,8), LiNiₓCo_{y}Mn_{(1-x-y)}O₂ (où x est approximativement compris entre 0,05 et 0,8 et y est approximativement compris entre 0,05 et 0,8), LiAlₓCo_{y}Ni_{(1-x-y)}O₂ (où x est approximativement compris entre 0,05 et 0,3 et y est approximativement compris entre 0,1 et 0,3), et LiTiₓCo_{y}Ni_{(1-x-y)}O₂ (où x est approximativement compris entre 0,05 et 0,3 et y est approximativement compris entre 0,1 et 0,3).

12. Batterie au lithium-ion rechargeable selon la revendication 2, dans laquelle l'électrode positive comporte au moins une matière active choisie parmi le groupe constitué de LiNi_{0,5}Mn_{1,5}O₄, LiCoPO₄, LiMnPO₄, LiVPO₄, Li₂MM'₃O₈ et LiMM'O₄, où M et M' sont des métaux de transition choisis parmi le groupe constitué de Cr, Mn, Ti, Fe, Co, Ni, V et Cu.

13. Batterie au lithium-ion rechargeable selon la revendication 2, comportant en outre un boîtier comportant un acier inoxydable.

14. Batterie au lithium-ion rechargeable selon la revendication 2, dans laquelle l'électrode positive et l'électrode négative sont des électrodes enroulées.

15. Batterie au lithium-ion rechargeable selon la revendication 2, comportant en outre un boîtier comportant du titane.
